(19) Europäisches Patentamt
European Patent Office
Office européen des brevets

(11) **EP 1 791 110 A2**

(12) **EUROPEAN PATENT APPLICATION**

(43) Date of publication:
**30.05.2007 Bulletin 2007/22**

(51) Int Cl.:
***G09G 5/14*** *(2006.01)*

(21) Application number: **06124542.9**

(22) Date of filing: **22.11.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **24.11.2005 KR 20050113153**

(71) Applicant: **Samsung Electronics Co., Ltd.**
**Suwon-si**
**442-742 Gyeonggi-Do (KR)**

(72) Inventor: **Kim, Young-chan**
**Daewon Cantavil**
**Apt. 103-1504,795**
**Gyeonggi-do (KR)**

(74) Representative: **Perkins, Dawn Elizabeth et al**
**Venner Shipley LLP**
**20 Little Britain**
**London EC1A 7DH (GB)**

(54) **Display apparatus, display system and control method thereof**

(57) A display system includes a signal source to provide a video signal and location information on a partial area of a display picture which is selected in order to control an image display state, a signal processor (23) to process the input video signal to be converted to a predetermined display resolution from an intermediate resolution based on an output resolution of the video signal input from the signal source, and a control unit (40) which corrects location information from the signal source in correspondence to the intermediate resolution and provides the corrected location information to the signal processor (23).

**Description**

The present invention relates to a display device, a display system, and a control method thereof, and more particularly, to a display device, a display system, and a control method thereof, which establishes an arbitrary area on which an image displayed.

Recently, in a conventional display system including a computer and a display apparatus, a user may choose an arbitrary area on which images are displayed, by a pointing device and change a display environment, for example, a brightness, a contrast, a sharpness, and/or a color value of a selected area of a main screen of the display apparatus.

Generally in such a conventional display system, the computer transmits information on an area selected by the pointing device to the display apparatus, and the display apparatus changes display parameter values of the selected area and controls the display parameter values of the selected area differently from those of a display environment of a main screen of the display apparatus.

In the meantime, an output resolution of a video signal output from the computer may differ generally from a display resolution of the display apparatus. Here, the display apparatus displays the video signal output from the computer on a screen by upscaling, downscaling, and down-sampling the video signal according to the display resolution of the display apparatus.

On the one hand, in a case that the output resolution of the video signal output from the computer coincides with a reference resolution (hereinafter referred to as an intermediate resolution) which is referred to as a reference when the display apparatus performs scaling, an area which a user desires to set up can be normally set up at the time of setting a control area in the conventional display system. On the other hand, in a case that the intermediate resolution to which the display apparatus refers does not coincide with the output resolution of the computer, the area which a user desires to set up can be incorrectly set up.

For example, when the video signal having a resolution of 1600*1200 is output from the computer, if the display apparatus scales the video signal input from the computer to convert from the intermediate resolution of 1920*1200 to the display resolution, an establishment area which a user desires is incorrectly set up.

One of the reasons may be that the output resolution of the video signal output from the computer is incorrectly recognized by the display apparatus. In particular, this error that the display apparatus incorrectly recognizes the output resolution of the video signal output from the computer, may be attributed to various causes, which include cases that a resolution of a specific frequency signal among signals output from the computer is not in a normal state so that the display apparatus cannot recognize the resolution correctly, an identical frequency signal has two separate resolutions, and/or the like.

Another reason may be that the output resolution of the video signal output from the computer is not supported with the intermediate resolution when the display apparatus performs scaling. That is, an area which a user desires may be not normally set up although the display apparatus correctly recognizes the output resolution of the video signal output from the computer.

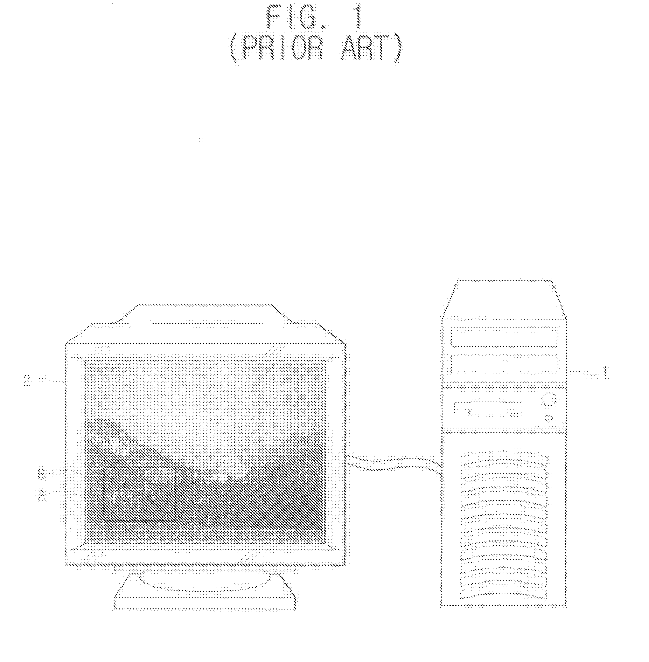

Figure 1 is a schematic diagram illustrating a setup method of a display adjusting area of a conventional display system. As illustrated in Figure 1, when a display apparatus 2 sets up an area of a video signal output from a computer 1 based on an intermediate resolution, if the intermediate resolution is different from an output resolution of the video signal output from the computer 1, although a user desires to set up an area "A" (solid line), an area "B" (dotted line) may be incorrectly set up.

The present invention provides a display device, a display system, and a control method thereof, to correctly set up a selected area which a user desires to establish.

Additional aspects and advantages of the present invention will be set forth in part in the description which follows and, in part, will be obvious from the description, or may be learned by practice of the general inventive concept.

The foregoing and/or other aspects of the present invention may be achieved by providing a display system comprising a signal source to provide a video signal and location information on a partial area of a display picture which is selected in order to control an image display state, a signal processor to process the input video signal to be converted to a signal having a predetermined display resolution from an intermediate resolution based on a resolution of the video signal input from the signal source, and a control unit which corrects the location information from the signal source in correspondence to the intermediate resolution and provides the corrected location information to the signal processor.

The signal source may include a computer to produce the video signal as the signal source, and a pointing device to select the partial area of the display picture by a user.

The intermediate resolution may be adaptively determined according to the resolution of the video signal input from the signal source, and the signal processor may include a scaler which is provided in a display apparatus, and scales the input video signal to be converted to the display resolution from the intermediate resolution.

The control unit may include a computer controller which is provided in the computer, requests intermediate resolution information to the display apparatus, corrects the location information so as to correspond to the intermediate resolution, and transmits the corrected location information to the display apparatus, and a display controller which is provided in the display apparatus and provides the intermediate resolution information to the computer controller according to the request of the computer controller.

The control unit may include a computer controller which is provided in the computer, and transmits the location information to the display apparatus together with output resolution information of the video signal, and a display controller which is provided in the display apparatus and corrects the location information so as to correspond to the intermediate resolution, based on the output resolution information received from the computer controller.

The corrected location information may be calculated according to an equation of $Rc = Dr*Ro/Cr$ in which $Rc$ denotes the corrected location information, $Dr$ denotes the intermediate resolution, and $Ro$ denotes the location information provided from the computer, and $Cr$ denotes the output resolution of the video signal which is output from the computer.

The signal source may provide predetermined display setting information on the selected partial area, and the signal processor may control the image display state of the area according to the corrected location information based on the display setting information.

The foregoing and/or other aspects of the present invention may also be achieved by providing a display apparatus comprising a display unit to display a video signal input from an external signal source, a signal processor to process the input video signal to be converted to a predetermined display resolution from an intermediate resolution based on a resolution of the input video signal input from the external signal source, and a control unit which receives location information on a partial area of a display picture which is selected in order to adjust an image display state, from the external signal source, and corrects location information in correspondence to the intermediate resolution to provide the corrected location information to the signal processor.

The intermediate resolution may be adaptively determined according to the resolution of the video signal input from the signal source, and the signal processor may include a scaler to scale the input video signal to be converted to the display resolution from the intermediate resolution.

The signal processor may control the image display state of an establishment area according to the corrected location information based on predetermined display setting information provided from the external signal source.

The corrected location information may be calculated according to an equation of $Rc = Dr*Ro/Cr$ in which $Rc$ denotes the corrected location information, $Dr$ denotes the intermediate resolution, $Ro$ denotes the location information which are provided from the external signal source, and $Cr$ denotes the output resolution of the video signal which is output from the external signal source.

The foregoing and/or other aspects of the present invention may also be achieved by providing a control method of controlling a display system including a signal source to provide a video signal, and a display apparatus which processes the input video signal to be converted to a predetermined display resolution from an intermediate resolution based on a resolution of the video signal input from the signal source to then be displayed on a screen, the control method including selecting a partial area of a display picture to control an image display state from a user, and correcting location information on the selected partial area to correspond to the intermediate resolution.

The correcting of the location information to correspond to the intermediate resolution may include controlling the signal source to request intermediate resolution information to the display apparatus, controlling the display apparatus to transmit the intermediate resolution information to the signal source according to the request, and controlling the signal source to correct the location information in correspondence to the intermediate resolution information to transmit the corrected result to the display apparatus.

The correcting of the location information to correspond to the intermediate resolution may include controlling the signal source to transmit the location information to the display apparatus together with the output resolution information of the video signal, and controlling the display apparatus to correct the location information according to the intermediate resolution based on the transmitted output resolution information.

The control method may further include receiving predetermined display setting information on the selected area from a user, and controlling the display apparatus to control an image display state of an area according to the corrected location information based on the display setting information.

The foregoing and/or other aspects of the present invention may also be achieved by providing a control method of a display apparatus including an interface unit to communicate with an external signal source, and a signal processor to process an input video signal to be converted to a predetermined display resolution from an intermediate resolution based on a resolution of the video signal input from the signal source, the control method including receiving resolution information of the video signal output from the external signal source through the interface unit and location information on a partial area of a display picture which is selected in order to control an image display state, and correcting the location information in correspondence to the intermediate resolution and providing the corrected result to the signal processor.

The control method may further include receiving predetermined display setting information from the external signal source, and controlling the signal processor to control the image display state of the area according to the corrected location information according to the display setting information.

The foregoing and/or other aspects of the present invention may also be achieved by providing a computer readable recoding medium containing computer readable codes to perform a control method of controlling a display system comprising a signal source to produce a video signal, and a display apparatus to convert the video signal to a signal having a predetermined display resolution to be displayed on a screen, the control method including selecting a partial area of a display picture to control an image display state of a video signal, and correcting location information of the image on the selected partial area to correspond to an intermediate resolution of a display apparatus to convert the video signal to a signal having a display resolution according to the corrected location information and an output resolution of the video signal.

The foregoing and/or other aspects of the present invention may also be achieved by providing a computer readable recording medium containing computer readable codes to perform a control method of controlling a display system comprising a signal source to produce a video signal, and a display apparatus to convert the video signal to a signal having a predetermined display resolution to be displayed on a screen, the control method including receiving resolution information of the video signal output from the external signal source through the interface unit and location information on a partial area of a display picture which is selected in order to control an image display state of the video signal, and correcting location information in correspondence to the intermediate resolution and providing the corrected location information to the signal processor.

The foregoing and/or other aspects of the present invention may also be achieved by providing a display system including a control unit which receives location information on a selected area of a display picture of a video signal which is selected to control an image display state of the video signal, and corrects the location information according to an intermediate resolution of the display unit and an output resolution of the video signal of the signal source, and a signal processor to convert the video signal to a signal having a predetermined display resolution according to the corrected location information.

The foregoing and/or other aspects of the present invention may also be achieved by providing a method of a display system, the method including receiving location information on a selected area of a display picture of a video signal which is selected to control an image display state of the video signal, and correcting the location information according to an intermediate resolution of the display unit and an output resolution of the video signal of the signal source, and converting the video signal to a signal having a predetermined display resolution according to the corrected location information.

The foregoing and/or other aspects of the present invention may also be achieved by providing A computer readable recording medium containing computer readable codes to perform a control method of controlling a display system comprising a signal source to produce a video signal, and a display apparatus to convert the video signal to a signal having a predetermined display resolution to be displayed on a screen, the control method including receiving location information on a selected area of a display picture of a video signal which is selected to control an image display state of the video signal, and correcting the location information according to an intermediate resolution of the display unit and an output resolution of the video signal of the signal source, and converting the video signal to a signal having a predetermined display resolution according to the corrected location information.

These and/or other aspects and advantages of the present invention will become apparent and more readily appreciated from the following description of the embodiments, taken in conjunction with the accompanying drawings of which:

Figure 1 is a schematic diagram illustrating a setup method of a display adjusting area of a conventional display system;

Figure 2 is a block diagram illustrating a display system including a display apparatus according to an embodiment of the present general inventive concept;

Figure 3 is a flowchart view illustrating a location information correction method according to an embodiment of the present general inventive concept; and

Figures 4 and 5 are flowcharts illustrating a control method of a display system according to embodiments of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present invention by referring to the figures.

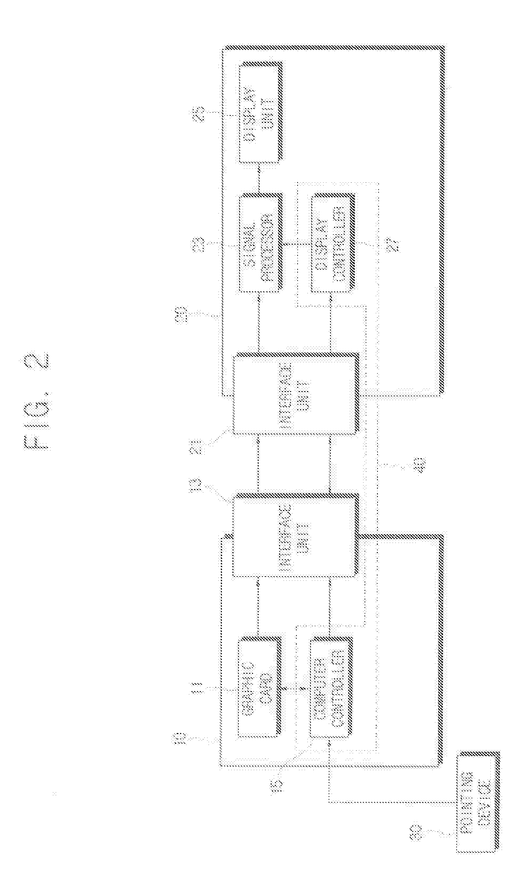

Figure 2 is a block diagram illustrating a display system according to an embodiment of the present general inventive concept. Referring to Figure 2, the display system includes a computer 10 as a signal source, a display apparatus 20, and a pointing device 30. The computer 10 includes a graphics card 11, an interface unit 13, and a computer controller 15. The display apparatus 20 has an interface unit 21, a signal processor 23, a display unit 25, and a display controller 27.

A video signal generated through the graphics card 11 of the computer 10 is transmitted to the display apparatus 20 through the interface units 13 and 21. The signal processor 23 of the display apparatus 20 converts the video signal input from the computer 10 into a format which can be displayed in the display unit 25, for example, a Low Voltage Differential Signaling (LVDS) format, and outputs the format-converted video signal to the display unit 25. The format-converted video signal may be output to the display unit 25 through an LVDS connector (not shown). Here, the interface units 13 and 21 for data transmission between the computer 10 and the display apparatus 20 may be implemented by one of D-Sub, Digital Visual/Video Interactive (DVI), or High Definition Multimedia Interface (HDMI) connectors.

Here, the signal processor 23 can perform various functions in correspondence to the format of input video signals. For example, the signal processor 23 can perform an analog to digital converting function and a digital decoding function, to convert input analog video signals of various kinds of formats into a digital video signal of a certain format, and a scaling function and a LVDS format conversion function, which receives a digital image signal and adjusts a vertical frequency, a resolution, and an aspect ratio of the digital image signal to fit for an output standard of the display unit 25. Moreover, the signal processor 23 includes a module to control a display environment, for example, a color value or/and a brightness, a contrast, and a sharpness of a screen of the display apparatus.

Here, the signal processor 23 can include a scaler (not shown). The scaler scales the video signal input from the computer 10 to convert from an intermediate resolution to a display resolution. Here, as described above, the intermediate resolution indicates a reference resolution which is used as a reference when scaling. That is, the intermediate resolution is adaptively determined according to a resolution of the video signal input from the computer 10. For example, in a case that the video signal having a resolution A is input from the computer 10, the scaler scales the input video signal to a display resolution C based on an intermediate resolution A'. Here, the resolutions A and A' may be different. However, it is possible that the resolutions A and A' may be same.

In the meantime, the display unit 25 according to the present embodiment is applicable to a variety of types of display modules such as a Digital Light Processing (DLP), a Liquid Crystal Display (LCD), and a Plasma Display Penal (PDP).

The pointing device 30 makes a user selectively input an arbitrary area on which an image is displayed. Therefore, a mouse, etc., can be used as the pointing device 30. Alternatively, it is possible that an On Screen Display (OSD) button and an OSD IC provided in a keyboard or the display apparatus 20 can be used as the pointing device 30.

Here, the pointing device 30 can be connected to the computer 10 via a Universal Serial Bus (USB) port, etc. The computer 10 transmits location information of the selected area input from the pointing device 30 to the display apparatus 20 through the interface unit 13. The detailed description thereof will be described later.

The display system according to the present embodiment includes a control unit 40. The control unit 40 corrects the location information of the selected area selected through the pointing device 30, so as to correspond to the intermediate resolution to which the display apparatus 20 refers as the reference. The control unit 40 may include a software algorithm regarding the correction of the location information. The control unit 40 determines whether or not the resolution of the video signal output from the computer 10 coincides with the intermediate resolution which the display apparatus 20 refers to as the reference, when scaling. In a case that the resolution does not coincide with the intermediate resolution, the control unit 40 corrects the location information of the area selected through the pointing device 30 in order to fit for the intermediate resolution.

An equation concerning the above correction method of the control unit 40 according to the present embodiment is expressed as follows.

$$Rc = Dr*Ro / Cr \qquad ...(1)$$

Here, Rc denotes corrected location information, Dr denotes an intermediate resolution of the display apparatus 20, Ro denotes location information which is selected by the pointing device 30, and Cr denotes an output resolution of the computer 10.

That is, the control unit 40 corrects the location information selected by the pointing device 30 based on the output resolution of the computer 10 and the intermediate resolution of the display apparatus 20.

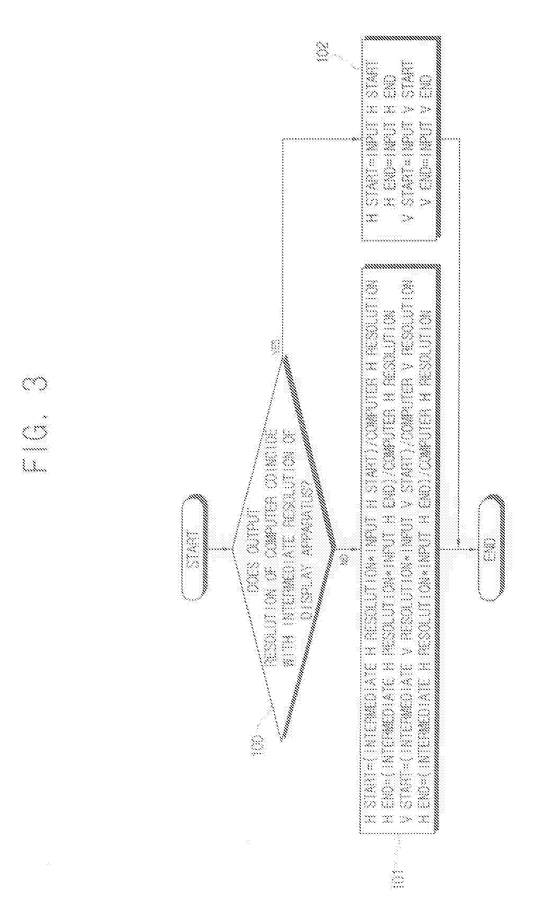

Figure 3 is a flowchart view illustrating a location information correction method according to an embodiment of the present general inventive concept.

Referring to Figures 2 and 3, the control unit 40 determines whether or not the output resolution of the computer 10 coincides with the intermediate resolution of the display apparatus 20 (S100).

When the output resolution does not coincide with the intermediate resolution, the control unit 40 calculates a corrected horizontal beginning coordinate (H START) value by multiplying an intermediate horizontal (H) resolution of the display apparatus 20 by an input horizontal beginning coordinate (H START) value input by the pointing device 30 and by dividing the multiplied value with a horizontal (H) resolution of the computer 10.

A corrected horizontal termination coordinate (H END) value, a corrected vertical beginning coordinate (V START) value, and a corrected vertical termination coordinate (V END) value can be calculated through the equation illustrated in Figure 3 (S101). That is, the corrected horizontal termination coordinate (H END) value is calculated by multiplying an intermediate horizontal (H) resolution of the display apparatus 20 by an input horizontal ending coordinate (H END) value input by the pointing device 30 and by dividing the multiplied value with a horizontal (H) resolution of the computer 10mul, the corrected vertical beginning coordinate (V START) value can be calculated by multiplying an intermediate vertical (V) resolution of the display apparatus 20 by an input vertical beginning coordinate (V START) value input by the pointing device 30 and by dividing the multiplied value with a vertical (V) resolution of the computer 10, and the corrected vertical termination coordinate (V END) value can be calculated by multiplying an intermediate vertical (V) resolution of the display apparatus 20 by an input vertical ending coordinate (V END) value input by the pointing device 30 and by dividing the multiplied value with a vertical (V) resolution of the computer 10.

If the output resolution coincides with the intermediate resolution, the control unit 40 uses the location information input by the pointing device 30 and sets up the area (S102).

When the output resolution of the computer 10 does not coincide with the intermediate resolution of the display apparatus 20, the difference between the output resolution of the computer 10 and the intermediate resolution of the display apparatus 20 is corrected to make a user correctly set up an area which the user desires.

The computer 10 according to the present embodiment further includes a user manipulator (not shown) to input display setting information to control an image display state of an area selected from a user.

The computer 10 provides the display setting information to the display apparatus 20. The signal processor 23 controls the image display state of the area set up according to the location information corrected by the above-described method.

The control unit 40 may include a computer controller 15 provided in the computer 10, and a display controller 27 provided in the display apparatus 20. The computer controller 15 and the display controller 27 can perform data communications via the interface units 13 and 21.

The computer controller 15 receives the location information on the area which is selected by the pointing device 30, corrects the received location information according to the intermediate resolution of the display apparatus 20, and transmits the corrected result to the display apparatus 20. Then, the display controller 27 sets up an area through the corrected location information.

Here, the computer controller 15 and the display controller 27 may be implemented by a software algorithm or/and a Central Processing Unit (CPU) or a microcomputer (MICOM).

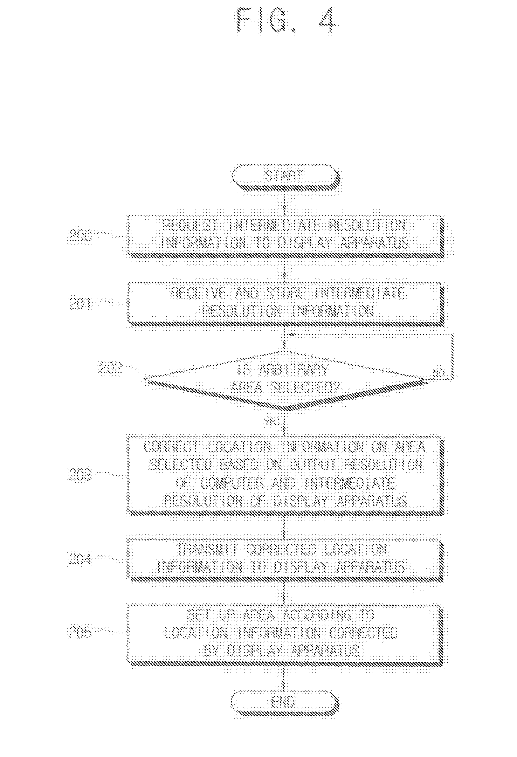

Figure 4 is a flowchart illustrating a control method of a display system according to an embodiment of the present general inventive concept.

Referring to Figures 2-4, the computer controller 15 requests the intermediate resolution information to the display apparatus 20 (S200). The display controller 27 transmits the intermediate resolution information to the computer 10 in response to the corresponding request from the computer controller 15. The computer 10 receives and stores the corresponding information (S201).

If the location information on the arbitrary area is input through the pointing device 30 (S202), the computer controller 15 corrects the location information on the area information selected through the pointing device 30, based on the output resolution of the computer 10 and the intermediate resolution of the display apparatus 20 (S203). Since determination of whether or not the concrete correction is performed and a correction method thereof are identical with the description of Figure 3, the detailed description thereof will be omitted.

The computer controller 15 transmits the corrected location information through the interface unit 13 to the display apparatus 20 (S204). According to the corrected location information transmitted from the computer 10, the display apparatus 20 sets up an area (S205). In the meantime, as described above, the signal processor 23 controls a display environment of the area which has been set up according to the display setting information transmitted from the computer 10.

Through this, a desired area is accurately set up and a display environment or/and a color value of a corresponding area can be controlled.

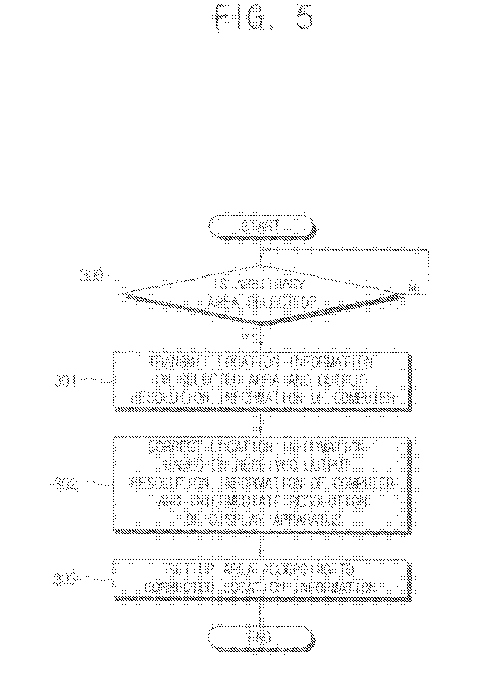

Figure 5 is a flowchart illustrating a control method of a display system according to embodiments of the present general inventive concept.

Referring to Figures 2-5, if an arbitrary area is selected through the pointing device 30 (S300), the computer controller 15 transmits location information on the selected area and the output resolution information of the computer 10 to the display apparatus 20 (S301).

The display controller 27 corrects the location information based on the intermediate resolution of the display apparatus 20 and the received output resolution information of the computer 10 (S302). Since determination of whether or not the concrete correction is performed and a correction method thereof are identical with the description of Figure 3, the detailed description thereof will be omitted.

The display controller 27 sets up an area according to the corrected area value (S303). Moreover, as described above, the signal processor 23 may control the image display state of the area which has been set up according to the display setting information transmitted from the computer controller 15.

The present invention can also be embodied as computer-readable codes on a computer-readable recording medium to perform the above control method. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present invention can be easily construed by programmers skilled in the art to which the present invention pertains.

As described above, the present invention provides a display system to correctly set an area of a screen of a display unit in which a desired image is displayed.

Although a few embodiments of the present invention have been shown and described, it will be appreciated by those skilled in the art that changes may be made in these embodiments without departing from the scope of the present invention as defined in the appended claims.

**Claims**

1. A display system comprising:

   a signal source configured to provide a video signal and location information defining a partial area of a displayed picture;
   a signal processor (23) configured to convert an input video signal to a predetermined display resolution from an intermediate resolution wherein the intermediate resolution is based on a resolution of the video signal provided from the signal source; and
   a control unit (40) configured to correct location information to correspond to the intermediate resolution and provide the corrected location information to the signal processor (23).

2. The display system according to claim 1, wherein the signal source comprises a computer (10) configured to produce the video signal and a pointing device (30) for selecting the partial area of the displayed picture.

3. The display system according to claim 2, further comprising a display apparatus (20), wherein the signal processor (23) is provided in the display apparatus (20).

4. The display system according to claim 3, wherein:

   the intermediate resolution is adaptively determined according to the resolution of the video signal provided from the signal source; and
   the signal processor (23) comprises a scaler which is provided in the display apparatus (20) to scale the input video signal to the display resolution from the intermediate resolution.

5. The display system according to claim 3 or 4, wherein the control unit (40) comprises:

   a computer controller (15) which is provided in the computer (10), and is configured to request intermediate resolution information from the display apparatus (20), correct the location information so as to correspond to the intermediate resolution, and transmit the corrected result to the display apparatus (20); and
   a display controller (27) which is provided in the display apparatus (20) and is configured to provide the intermediate resolution information to the computer controller (15) in response to the request of the computer controller (15).

6. The display system according to claim 4, wherein the control unit (40) comprises:

   a computer controller (15) which is provided in the computer (10), and transmits the location information to the display apparatus (20) together with resolution information of the video signal output by the computer (10); and

a display controller (27) which is provided in the display apparatus (20) and corrects the location information so as to correspond to the intermediate resolution, based on the resolution information received from the computer controller (15).

7. The display system according to claim 5 or 6, wherein the corrected location information is calculated according to the following equation,

$$Rc = Dr*Ro/Cr$$

where Rc denotes the corrected location information, Dr denotes the intermediate resolution, and Ro denotes the location information provided from the computer (10), and Cr denotes the resolution of the video signal which is output from the computer (10).

8. The display system according to claim 7, wherein:

the signal source provides predetermined display setting information on the selected partial area; and
the signal processor (23) is configured to control the image display state of the area according to the corrected location information based on the display setting information.

9. A display apparatus comprising:

a display unit (25) configured to convert display a video signal input from an external signal source;
a signal processor (23) configured to convert an input video signal to a predetermined display resolution from an intermediate resolution based on an output resolution of the video signal input from the external signal source; and
a control unit (27) configured to receive location information on a partial area of a display picture which is selected from the external signal source, and correct the location information to correspond to the intermediate resolution and to then provide the corrected result to the signal processor (23).

10. The display apparatus according to claim 9, wherein:

the intermediate resolution is adaptively determined according to the resolution of the video signal input from the signal source; and
the signal processor comprises a scaler to scale the input video signal to be converted to the display resolution from the intermediate resolution.

11. The display apparatus according to claim 10, wherein the signal processor (23) controls the image display state of an establishment area according to the corrected location information based on predetermined display setting information provided from the external signal source.

12. The display apparatus according to claim 11, wherein the corrected location information is calculated according to the following equation,

$$Rc = Dr*Ro/Cr$$

where Rc denotes the corrected location information, Dr denotes the intermediate resolution, Ro denotes the location information which is provided from the external signal source, and Cr denotes the output resolution of the video signal which is output from the external signal source.

13. A control method of controlling a display system comprising a signal source to produce a video signal, and a display apparatus (20) to convert the input video signal to a signal having a predetermined display resolution to be displayed on a screen, the control method comprising:

selecting a partial area of a display picture; and

correcting location information of the image on the selected partial area to correspond to an intermediate resolution of the display apparatus (20) to convert the video signal to a signal having a display resolution according to the corrected location information and an output resolution of the video signal.

14. The control method according to claim 13, wherein the correcting of the location information to correspond to the intermediate resolution comprises:

controlling the signal source to request intermediate resolution information from the display apparatus (20); controlling the display apparatus (20) to transmit the intermediate resolution information to the signal source in response to the request; and controlling the signal source to correct the location information in correspondence to the intermediate resolution information to transmit the corrected result to the display apparatus (20).

15. The control method according to claim 13, wherein the correcting of the location information to correspond to the intermediate resolution comprises:

controlling the signal source to transmit the location information to the display apparatus (20) together with the output resolution information of the video signal; and controlling the display apparatus (20) to correct the location information according to the intermediate resolution based on the transmitted output resolution information.

16. The control method according to claim 14 or 15, further comprising:

receiving predetermined display setting information on the selected area from a user; and controlling the display apparatus (20) to control an image display state of an area according to the corrected location information based on the display setting information.

17. A control method of a display apparatus (20) comprising an interface unit (21) to communicate with an external signal source, and a signal processor (23) to process an input video signal to be converted to a signal having a predetermined display resolution, the control method comprising:

receiving resolution information of the video signal output from the external signal source through the interface unit (21) and location information on a partial area of a display picture which is selected; and correcting location information in correspondence to the intermediate resolution and providing the corrected location information to the signal processor (23).

18. The control method according to claim 17, further comprising:

receiving predetermined display setting information from the external signal source; and controlling the signal processor (23) to control the image display state of the area according to the corrected location information according to the display setting information.

19. A display system comprising:

at least one control unit (40) configured to receive location information on a selected area of a display picture of a video signal, and correct the location information according to an intermediate resolution of a display unit (25) and an output resolution of a video signal from a signal source; and a signal processor (23) configured to convert the video signal to a signal having a predetermined display resolution according to the corrected location information.

20. The display system according to claim 19, further comprising:

a personal computer (10) including a first control unit (15) configured to receive the location information on the selected area of the display picture of a video signal; and a display apparatus (20) connected to the personal computer (10), including the signal processor (23), including the display unit (25) to display an image according to the converted video signal, and including a second control unit (27) configured to correct the location information according to the intermediate resolution of the display unit (25) and the output resolution of the video signal of the signal source.

**21.** The display system according to claim 19, further comprising:

a personal computer (10) including the control unit (15); and
a display apparatus (20) connected to the personal computer (10) and including the signal processor (23) and the display unit (25) to display an image according to the converted video signal

**22.** The display system according to claim 19, further comprising:

a display apparatus (20) containing the control unit (27), the signal processor (23), and the display unit (25) to display an image according to the converted video signal.

**23.** A method of operating a display system, the method comprising:

receiving location information on a selected area of a display picture of a video signal, and correcting the location information according to an intermediate resolution of a display unit and an output resolution of the video signal of the signal source; and
converting the video signal to a signal having a predetermined display resolution according to the corrected location information.

**24.** A computer readable recording medium having stored thereon computer readable codes to perform a method according to any one of claims 13 to 18 or 23.

FIG. 1
(PRIOR ART)

FIG. 2

EP 1 791 110 A2

# FIG. 3

START

100 — DOES OUTPUT RESOLUTION OF COMPUTER COINCIDE WITH INTERMEDIATE RESOLUTION OF DISPLAY APPARATUS?

YES

102

NO

101 —

H START=(INTERMEDIATE H RESOLUTION*INPUT H START)/COMPUTER H RESOLUTION
H END=(INTERMEDIATE H RESOLUTION*INPUT H END)/COMPUTER H RESOLUTION
V START=(INTERMEDIATE V RESOLUTION*INPUT V START)/COMPUTER V RESOLUTION
H END=(INTERMEDIATE H RESOLUTION*INPUT H END)/COMPUTER H RESOLUTION

H START=INPUT H START
H END=INPUT H END
V START=INPUT V START
V END=INPUT V END

END

# FIG. 4

START

200 — REQUEST INTERMEDIATE RESOLUTION INFORMATION TO DISPLAY APPARATUS

201 — RECEIVE AND STORE INTERMEDIATE RESOLUTION INFORMATION

202 — IS ARBITRARY AREA SELECTED? — NO

YES

203 — CORRECT LOCATION INFORMATION ON AREA SELECTED BASED ON OUTPUT RESOLUTION OF COMPUTER AND INTERMEDIATE RESOLUTION OF DISPLAY APPARATUS

204 — TRANSMIT CORRECTED LOCATION INFORMATION TO DISPLAY APPARATUS

205 — SET UP AREA ACCORDING TO LOCATION INFORMATION CORRECTED BY DISPLAY APPARATUS

END

# FIG. 5

START

300 — IS ARBITRARY AREA SELECTED?

NO

YES

301 — TRANSMIT LOCATION INFORMATION ON SELECTED AREA AND OUTPUT RESOLUTION INFORMATION OF COMPUTER

302 — CORRECT LOCATION INFORMATION BASED ON RECEIVED OUTPUT RESOLUTION INFORMATION OF COMPUTER AND INTERMEDIATE RESOLUTION OF DISPLAY APPARATUS

303 — SET UP AREA ACCORDING TO CORRECTED LOCATION INFORMATION

END